# EUROPÄISCHE PATENTANMELDUNG

(11) **EP 1 736 688 A2**
(43) Veröffentlichungstag der Anmeldung: **27.12.2006**
(21) Anmeldenummer: 06012951.7
(22) Anmeldetag: 23.06.2006
(51) Int. Cl.: F16H 7/12

(54) **Riemenspanner mit aussenliegender Dämpfungshülse**

(30) Priorität: 24.06.2005 DE 102005029789
(71) Anmelder: Muhr und Bender KG, 57439 Attendorn (DE)
(72) Erfinder: Kobelev, Vladimir, Dr.rer.nat., 57439 Attendorn (DE); Jung, Manfred, 56457 Westerburg (DE); Berger, Rudolf, 52152 Simmerath (DE)
(74) Vertreter: Neumann, Ernst Dieter

(57) **Zusammenfassung**

Riemenspannvorrichtung 11 mit einer Torsionsfederanordnung 14 und einer Dämpfungsanordnung 21 mit einem Gehäuse 12 mit einer Längsachse A, einer Torsionsfeder 14, die koaxial zur Längsachse A in dem Gehäuse 12 liegt und mit einem ihrer Enden drehfest in dem Gehäuse 12 festgelegt ist, einem Spannarm 15, der gegenüber dem Gehäuse 12 um die Längsachse A schwingend drehbar gelagert ist und mit dem anderen Ende der Torsionsfeder 14 drehfest verbunden ist, und einer Spannrolle 16, die an einem freien Ende des Spannarms 15 um eine zur Längsachse A parallele Drehachse B drehbar gelagert ist, wobei die Dämpfungsanordnung 21 das Gehäuse 12 koaxial zur Längsachse A umgibt und zylindrische Reibflächenpaarungen 36, 37 aufweist.

## Beschreibung

Die Erfindung betrifft eine Riemenspannvorrichtung mit einer Torsionsfederanordnung und einer Dämpfungsanordnung, mit einem Gehäuse mit einer Längsachse, einer Torsionsfeder, die koaxial zur Längsachse in dem Gehäuse liegt und mit einem ihrer Enden drehfest in dem Gehäuse festgelegt ist, einem Spannarm, der gegenüber dem Gehäuse um die Längsachse schwingend drehbar gelagert ist und mit dem anderen Ende der Torsionsfeder drehfest verbunden ist, und einer Spannrolle, die an einem freien Ende des Spannarms um eine zur Längsachse parallele Drehachse drehbar gelagert ist. Derartige Riemenspannvorrichtungen werden zusammen mit Riementrieben verwendet, die zumindest zwei Riemenscheiben und ein über diese laufenden endlosen Riemen umfassen, wobei eine der Riemenscheiben eine Antriebsscheibe ist und die Spannrolle der Riemenspannvorrichtung auf den Leertrum des endlosen Riemens einwirkt, damit Längenänderungen ausgeglichen und Schwingungserscheinungen vermieden werden und der Riemen nicht von den Riemenscheiben springt. Als Riemen können die heute weitgehend üblichen Zahnriemen oder Keilriemen Verwendung finden. Bei Ersatz der Riemenscheiben und der Spannrolle durch Kettenräder kann die Vorrichtung sinngemäß auch bei Kettentrieben Anwendung finden.

Ein typischer Anwendungsfall von Riementrieben liegt im Antrieb der Nebenaggregate eines Verbrennungsmotors, wobei eine erste Riemenscheibe auf der Kurbelwelle sitzt und als Antriebsscheibe dient und weitere Riemenscheiben auf den Wellen von Nebenaggregaten wie Wasserpumpe, Lichtmaschine, Klimaanlage, Kompressor usw. sitzen und vom Riementrieb angetrieben werden. Hierbei entsteht in Umlaufrichtung hinter der antreibenden Riemenscheibe ein Lostrum, dessen Lose von der Spannrolle ausgeglichen werden muß, damit der Riemen nicht von den Riemenscheiben abspringt. Im Laufe der Betriebsdauer und unter Temperatureinfluß verändert sich die Riemenlänge, so daß der Spannarm mit der Spannrolle unter Federvorspannung auf den Lostrum einwirken muß. Damit sich die Bewegung des Spannarms und des Riemens nicht einschwingt, ist eine Dämpfungsvorrichtung für diese Bewegung des Spannarms vorgesehen. Die Dreh- bzw. Pendelachse des Spannarmes liegt hierbei parallel zu den Drehachsen der Riemenscheiben und der Spannrolle.

Aus der EP 1 437 528 A2 ist eine Vorrichtung der vorstehend genannten Art bekannt, bei der eine Dämpfungsanordnung zwischen einer mit dem Spannarm verbundenen Hülse und dem Inneren des Gehäuserohres zusammenwirkt. Hierbei ist der Wirkdurchmesser der Dämpfungsanordnung durch den Gehäusedurchmesser begrenzt, der möglichst geringgehalten werden soll. Dies führt zu einer ungünstig langen Dämpfungsanordnung.

Aus der EP 1 420 192 A2 sind Riemenspannvorrichtungen der oben genannten Art bekannt, bei denen zu Dämpfungszwecken die Torsionsfeder gegenüber dem Gehäuse mittels einer innenliegenden gummielastischen Drehschubfeder verbunden ist und bei der zusätzlich eine radiale Reibscheibe vorgesehen ist, die mit einer vorgespannten Wellscheibe auf radiale Reibflächen einwirkt. Der Gesamtaufwand dieser Dämpfungsanordnungen ist sehr hoch. Die Verbauung der Drehschubfeder ist schwierig.

Hiervon ausgehend liegt der vorliegenden Erfindung die Aufgabe zugrunde, eine Riemenspannvorrichtung der eingangs genannten Art bereitzustellen, deren Dämpfungsanordnung wesentlich vereinfacht ist.

Die Lösung hierfür besteht in einer Riemenspannvorrichtung der genannten Art, die sich dadurch auszeichnet, daß die Dämpfungsanordnung das Gehäuse koaxial zur Längsachse umgibt und zylindrische Flächenpaarungen mit radialer Belastung aufweist. Diese erfindungsgemäße Dämpfungsvorrichtung umfaßt wenige einfach aufgebaute Teile und ist insbesondere einfach zu montieren, wobei die funktionsgerechte Montage einfach zu kontrollieren ist, da die wesentlichen Funktionsteile von außen sichtbar sind.

In einer ersten bevorzugten Ausführungsform ist vorgesehen, daß die Dämpfungsanordnung eine am Umfang geschlitzte Reibungshülse umfaßt, die mit einer inneren Zylinderfläche auf einer äußeren Zylinderfläche des Gehäuses sitzt und die bei Relativbewegung des Spannarms gegenüber dem Gehäuse auf der Zylinderfläche gleitet. Die genannte Zylinderfläche kann hierbei die ursprüngliche Außenfläche des Gehäuses sein, das beispielsweise als gezogenes Rohr ausgebildet sein kann, so daß die Zylinderfläche nicht besonders bearbeitet werden muß. Die aus geeignetem Kunststoff bestehende Dämpfungshülse ist ein einfaches und billiges Bauteil.

Es wird weiterhin vorgeschlagen, daß die Reibungshülse mittels eines äußeren Formvorsprungs, insbesondere einer Rippe in einem Lagerauge des Spannarms formschlüssig gehalten ist, sowie daß die Reibungshülse von einer geschlitzten Federhülse mit radialer Vorspannung umschlossen wird, wobei der äußere Formvorsprung der Reibungshülse durch den Schlitz der Federhülse hindurchgreift. Zur Festlegung der Reibungshülse und der Federhülse gegenüber dem Spannarm sind hiermit keine zusätzlichen Befestigungsmittel erforderlich. Die Dämpfungsrate kann durch Austausch einer Federhülse, je nach Anwendungsfall, einfach variiert werden. Federhülsen bzw. C-förmig gebogene Bandfedern sind billig herstellbar.

Die Reibungshülse und die Federhülse können in Umfangsrichtung formschlüssig ineinandergreifen, so daß keine relative Drehbewegung zwischen beiden möglich ist. Beispielsweise kann ein radialer Zapfen oder Noppen an der Reibungshülse in eine Bohrung oder ein Loch in der Federhülse eingreifen.

Während das Lagerauge das Gehäuse mit Abstand umgeben kann, ist die unmittelbare Lagerung des Spannarms über einen in das Lagerauge eingesetzten Stopfen möglich, der im Gehäuse drehbar gelagert ist, gegebenenfalls unter Einsatz einer zusätzlichen Gleitlagerbuchse.

Nach einer weiteren günstigen Ausführungsform ist vorgesehen, daß die Dämpfungsanordnung in radialer Überdeckung mit der Spannrolle angeordnet ist. Hieraus ergibt sich eine besonders kurze Baulänge der Gesamtvorrichtung.

Im Anschluß an das Lagerauge des Spannarms kann ein Befestigungsflansch auf dem Gehäuse angeordnet sein, der als Anschraubflansch dienen kann und damit als einziges Befestigungselement neben entsprechenden Verschraubungsmittein gegenüber einem Aggregat erforderlich ist.

Eine zweite günstige Ausführungsform geht dahin, daß die Dämpfungsanordnung eine geschlitzte Reibungshülse umfaßt, die mit einer inneren Zylinderfläche auf einer äußeren Zylinderfläche eines mit dem Spannarm verbundenen Lagerauges sitzt und die bei Relativbewegung des Spannarms gegenüber dem Gehäuse auf dieser Zylinderfläche gleitet. Hiermit kann die Dämpfungsanordnung auf einem nochmals größeren Durchmesser angeordnet werden. Das genannte Lagerauge kann verkröpft zum Spannarm ausgebildet werden. In günstiger Ausführung ist auch hier vorgesehen, daß die Reibungshülse von einer geschlitzten Federhülse mit radialer Vorspannung umschlossen ist, wobei auch hier die Reibungshülse und die Federhülse in Umfangsrichtung formschlüssig miteinander verbunden sein können. Die Federhülse kann eine radial aufgebogene Lasche zur drehfesten Festlegung in einem mit dem Gehäuse verbindbaren Bauteil aufweisen. Da die Reibungsanordnung nunmehr auf der genannten Hülse liegt, ist ihre Festlegung im Drehsinn gegenüber einem Bauteil erforderlich, mit dem das Gehäuse letztendlich fest verbunden wird, d.h. ein Aggregat oder ein Aggregateträger für dieses Aggregat oder an diesem Aggregat, das in den Riementrieb eingeschlossen ist, für den die Riemenspannvorrichtung vorgesehen ist,

Bei der hier genannten Ausführung kann vorgesehen sein, daß die Dämpfungsanordnung im Verhältnis zum Spannarm axial versetzt ist.

Auch hier kann im Anschluß an die Hülse des Spannarms ein Befestigungsflansch vorgesehen sein, der insbesondere als Stützflansch ausgebildet werden kann, der mit einer auf das Ende des Gehäuses aufsetzbaren axial anziehbaren Spannhülse zusammenwirken kann.

Die Torsionsfeder ist in allen genannten Ausführungen bevorzugt als Bündel aus Federstäben ausgebildet, das mit seinen Enden formschlüssig in Buchsen eingesetzt ist, die ihrerseits mit dem Gehäuse einerseits und dem Spannarm andererseits unmittelbar oder mittelbar verbunden sind.

Bevorzugte Ausführungsbeispiele der Erfindung sind in den Figuren dargestellt und werden nachstehend beschrieben.
- Figur 1: zeigt eine erfindungsgemäße Riemenspannvorrichtung in einer ersten Ausführungsform im Längsschnitt;
- Figur 2: zeigt eine Vorrichtung nach Figur 1 im Querschnitt A-A;
- Figur 3: zeigt eine Vorrichtung nach Figur 1 im Querschnitt B-B;
- Figur 4: zeigt eine erfindungsgemäße Riemenspannvorrichtung in einer zweiten Ausführung im Längsschnitt;
- Figur 5: zeigt eine Vorrichtung nach Figur 4 im Querschnitt A-A;
- Figur 6: zeigt eine Vorrichtung nach Figur 4 im Querschnitt B-B;
- Figur 7: zeigt eine erfindungsgemäße Riemenspannvorrichtung in einer dritten Ausführungsform im Längsschnitt;
- Figur 8: zeigt eine Vorrichtung nach Figur 7 im Querschnitt A-A;
- Figur 9: zeigt eine Vorrichtung nach Figur 8 mit Abstützung.

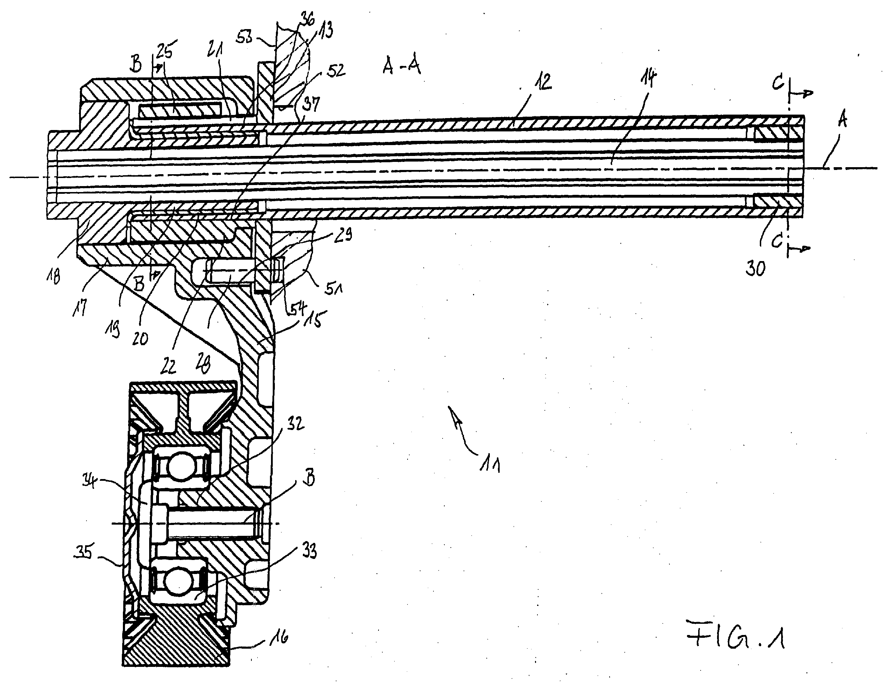

Die Figuren 1 bis 3 werden nachstehend gemeinsam beschrieben. Eine erfindungsgemäße Riemenspannvorrichtung 11 umfaßt ein rohrförmiges Gehäuse 12 mit einer Längsachse A, an das ein Befestigungsflansch 13 außen angesetzt ist und in dem eine Torsionsfeder 14 einliegt, einen um die Längsachse A schwingenden Spannarm 15 sowie eine am freien Ende des Spannarmes um eine parallel zur Längsachse A liegende Drehachse B drehbare Spannrolle 16. Der Spannarm 15 umfaßt ein Lagerauge 17, in das ein Stopfen 18 eingesetzt ist. Der Stopfen 18 hat einen Hülsenansatz 19, der in das Gehäuse 12 eingreift und über eine Gleitlagerbuchse 20 in diesem drehbar gelagert ist. Die Torsionsfeder 14 ist über einen fest in das Gehäuse eingesetzten Stopfen 30 an einem Ende des Gehäuses 12 drehfest mit diesem verbunden, während das andere Ende der Torsionsfeder 14 drehfest mit dem Stopfen 18 und damit mit dem Spannarm 15 verbunden ist. Auf dem Gehäuse 12 sitzt innerhalb des Lagerauges 17 eine am Umfang geschlitzte Dämpfungshülse 21, die mit einer Außenrippe 22 drehfest zwischen zwei Rippenhaltern 23, 24 im Lagerauge 17 gehalten ist. Die Reibungshülse 21 wird von einer ebenfalls am Umfang geschlitzten Federhülse 25 umgeben, die gegenüber der Reibungshülse 21 radial vorgespannt ist und somit die geschlitzte Reibungshülse mit nach innen gerichteter radialer Vorspannung auf dem zylindrischen Gehäuse 12 festhält. Die Federhülse 25 ist gegenüber der Reibungshülse, 21 in Umfangsrichtung formschlüssig festgelegt, insbesondere durch einen Radialnoppen 26, der in ein entsprechendes Loch 27 in der Federhülse 25 eingreift. Am Befestigungsflansch 13 ist ein Anschlagstift 28 erkennbar, der in ein umfangsgerichtetes Langloch 29 im Spannarm 15 eingreift und somit die relative Schwenkbewegung des Spannarmes 15 gegenüber dem Befestigungsflansch 13 und damit gegenüber dem Gehäuse 12 begrenzt. Im Befestigungsflansch 13 ist weiterhin eines von mehreren Befestigungslöchern 31 zum Anschrauben des Befestigungsflansches 13 mittels Schrauben an einem Aggregat gezeigt. Am äußeren Ende des Spannarmes 15 ist weiterhin ein Zapfenansatz 32 erkennbar, auf dem die Spannrolle 16 mittels eines Rillenkugellagers 33 gelagert ist, wobei das Rillenkugellager mittels einer Schraube 34 auf dem Zapfenansatz 32 festgesetzt ist. Zur Abdichtung des Rillenkugellagers 33 ist ein Deckel 35 in die Spannrolle 16 eingesetzt. In eine Bohrung 44 im Spannarm 15 ist ein Sicherungsstift 45 eingesetzt, der eine deckungsgleiche Bohrung im Befestigungsflansch 13 durchsetzt und den Spannarm 15 zur Montage in einer stark vorgespannten Stellung gegenüber dem Befestigungsflansch hält.

Wie in Figur 1 im einzelnen zu erkennen ist, wird das Gehäuse 12 in eine Gehäuseöffnung 52 im Aggregat 51 eingesteckt, das nur teilweise dargestellt ist. Der Flansch 13 legt sich dabei gegen eine Flanschfläche 53 im Aggregat 51 an, die zur Stirnseite des Aggregats 51 weist, an der der gesamte Riementrieb aufgespannt ist. In eine Ansenkung 54 in der Flanschfläche 53 greift der Stift 28, der den Flansch 13 durchdringt, zur Verdrehsicherung des Flansches ein. Die Verspannung des Flansches 13 mit dem Aggregat 51 erfolgt durch eine in dieser Schnittebene nicht erkennbare Schraube, die durch die Durchgangsöffnung 31 durchgesteckt ist und in ein Gewindeloch in der Flanschfläche 53 eingeschraubt ist.

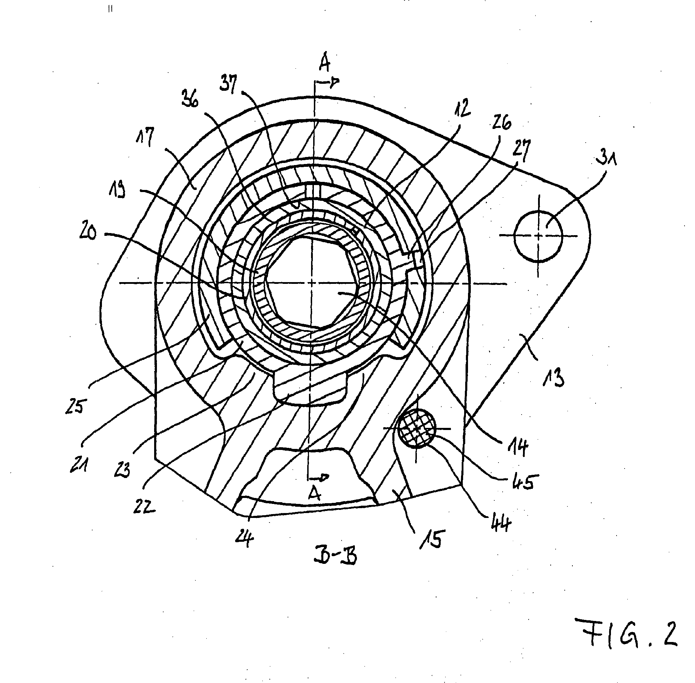

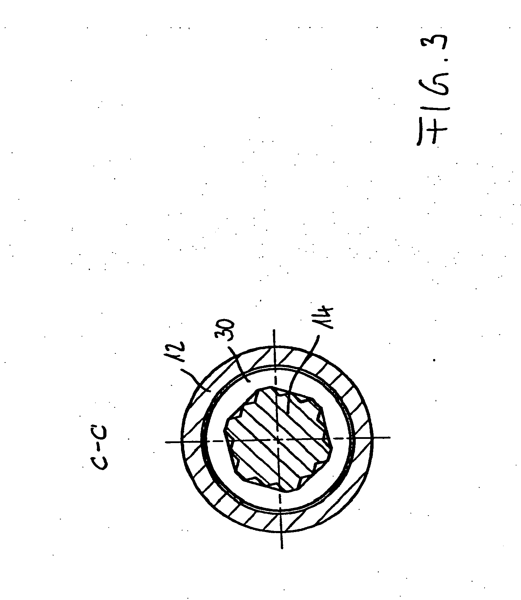

Aus der vorstehend beschriebenen Konstruktion ergibt sich die folgende Funktion der Riemenspannvorrichtung. Gegenüber dem mit dem Flansch 13 festlegbaren Gehäuse 12 ist der Spannarm 15 mit der Buchse 19 um die Längsachse A verschwenkbar. Bei einer Schwenkbewegung wird die Torsionsfeder 14, die zum einen in dem Stopfen 30 und damit im Gehäuse 12 festgelegt ist, zum anderen in der Buchse 19 und damit dem Spannarm 15 festgelegt ist, gegen elastische Rückstellkräfte verdreht. In der Einbaulage ist es hierbei möglich, daß die Torsionsfeder 14 in einer bereits stark vorgespannten verdrehten Stellung gehalten ist. Jede Schwenkbewegung des Spannarmes 15 gegenüber dem Gehäuse 12 erzeugt eine Reibung der Reibungshülse 21, die durch die Bandfeder 25 radial nach innen vorgespannt ist, gegenüber dem Gehäuse 12 in der Reibflächenpaarung 36, 37, so daß die Schwingbewegung des Spannarmes gedämpft wird. Wie in den Figuren 2 und 3 erkennbar ist, haben die Stopfen 18, 30 jeweils eine polygone Innenkontur, in der die Torsionsfeder 14 formschlüssig aufgenommen ist. Die Torsionsfeder 14 kann hierbei aus einem Bündel von einzelnen parallelen Federstäben zusammengesetzt sein, die hier nicht bezeichnet sind.

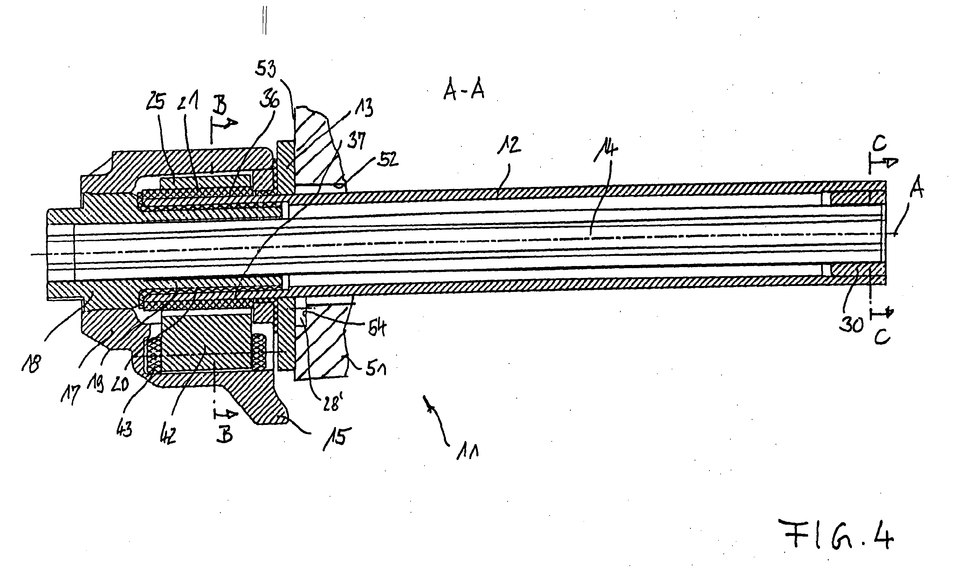

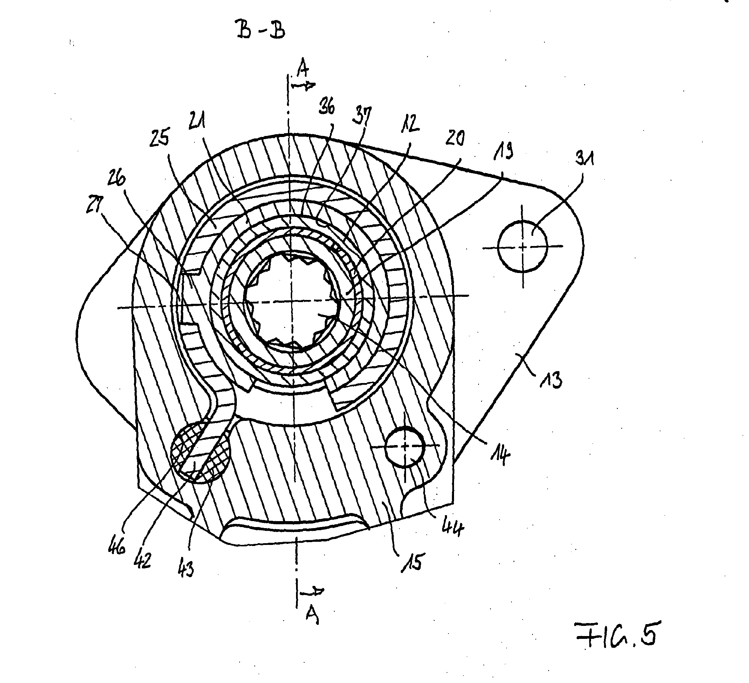

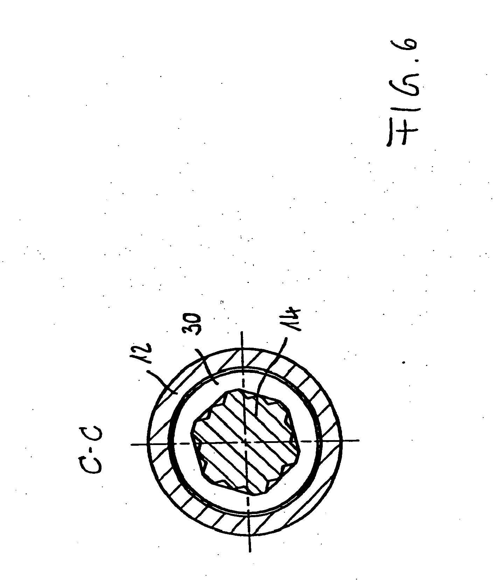

Die Figuren 4 bis 6 werden nachstehend gemeinsam beschrieben. Eine erfindungsgemäße Riemenspannvorrichtung 11 umfaßt im wesentlichen ein rohrförmiges Gehäuse 12 mit einer Längsachse A, an das ein Befestigungsflansch 13' außen angesetzt ist, und in dem eine Torsionsfeder 14 einliegt, einen um die Längsachse A schwingenden Spannarm 15 sowie eine am freien Ende des Spannarmes um eine parallel zur Längsachse A liegende Drehachse drehbare Spannrolle. In den Figuren 4 und 5 ist der Spannarm 15 abgebrochen dargestellt. Er kann analog zu dem in Figur 1 gezeigten Spannarm ausgebildet sein. Der Spannarm 15 umfaßt ein Lagerauge 17, in das ein Stopfen 18 eingesetzt ist. Das Lagerauge 17' ist über eine Gleitlagerbuchse 20' unmittelbar auf dem Gehäuse 12 drehbar gelagert. Der Stopfen 18 hat einen Hülsenansatz 19, der in das Gehäuse 12 eingreift und über eine Gleitlagerbuchse 20 in diesem drehbar gelagert ist. Die Torsionsfeder 14 ist über einen fest in das Gehäuse 12 eingesetzten Stopfen 30 an einem Ende des Gehäuses 12 drehfest mit diesem verbunden, während das andere Ende der Torsionsfeder drehfest mit dem Stopfen 18 und damit mit dem Spannarm 15 verbunden ist. Auf dem Gehäuse 12 sitzt innerhalb des Lagerauges 17 eine am Umfang geschlitzte Dämpfungshülse 21. Die Reibungshülse 21 wird von einer ebenfalls am Umfang geschlitzten Federhülse 25 umgeben, die gegenüber der Reibungshülse 21 radial vorgespannt ist und somit die geschlitzte Reibungshülse mit radialer nach innen gerichteter Vorspannung auf dem zylindrischen Gehäuse 12 festhält. Die Federhülse 25 ist gegenüber dem Spannarm 15 mittels einer radial nach außen gebogenen Lasche 42 in Umfangsrichtung formschlüssig festgelegt, die in eine Tasche 46 im Spannarm 15 eingreift, wobei ein gummielastisches Dämpfungselement 43 zwischen beiden eingesetzt ist. Die Dämpfungshülse 21 ist drehfest in der Federhülse 25 gehalten, insbesondere durch einen Radialnoppen 26, der in ein entsprechendes Loch 27 in der Federhülse 25 eingreift. Im Befestigungsflansch 13 ist eines von mehreren Befestigungslöchern 31 zum Anschrauben des Befestigungsflansches 13 mittels Schrauben an einem Aggregat gezeigt. Im Befestigungsflansch ist weiterhin eine Bohrung 44 zur Aufnahme eines Sicherungsstiftes für die Montage gezeigt, dessen Funktion bereits beim ersten Ausführungsbeispiel beschrieben wurde.

Wie in Figur 4 zu erkennen ist, ist das Gehäuse 12 in eine Gehäuseöffnung 52 eines = Aggregats 51 eingesteckt, das nur teilweise dargestellt ist. Hierbei legt sich der Flansch 13 an einer Flanschfläche 53 des Aggregats 51 an, das die Gehäuseöffnung 52 umgibt. Ein in den Flansch 13 eingesetzter Stift 28' greift zur Verdrehsicherung in eine Ansenkung 54' in der Flanschfläche 53 des Aggregats 51 ein. Mittels einer im Schnitt nicht dargestellten Schraube, die durch das Schraubenloch 31 im Flansch 13 durchgesteckt ist, ist die Riemenspannvorrichtung mit dem Aggregat 51 verspannt.

Aus der vorstehend beschriebenen Konstruktion ergibt sich die folgende Funktion der Riemenspannvorrichtung. Gegenüber dem mit dem Flansch 13 festlegbaren Gehäuse 12 ist der Spannarm 15 mit der Buchse 19 um die Längsachse A verschwenkbar. Bei einer Schwenkbewegung wird die Torsionsfeder 14, die zum einen in dem Stopfen 30 und damit im Gehäuse 12 festgelegt ist, zum anderen in der Buchse 19 und damit dem Spannarm 15 festgelegt ist, gegen elastische Rückstellkräfte verdreht. In der Einbaulage ist es hierbei möglich, daß die Torsionsfeder 14 in einer bereits stark vorgespannten verdrehten Stellung gehalten ist. Jede Schwenkbewegung des Spannarmes 15 gegenüber dem Gehäuse 12 erzeugt eine Reibung der Reibungshülse 21, die durch die Bandfeder 25 radial vorgespannt ist, gegenüber dem Gehäuse 12 in der Reibflächenpaarung 36, 37, so daß die Schwingbewegung des Spannarmes gedämpft wird.

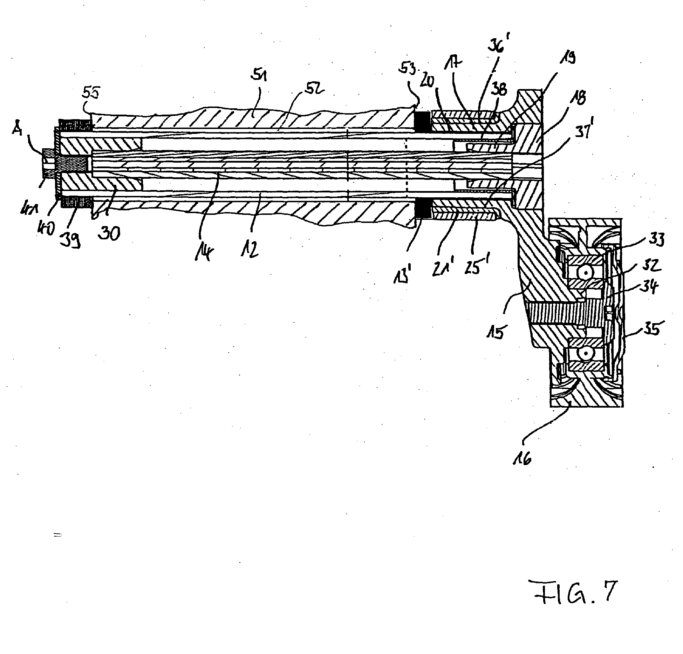

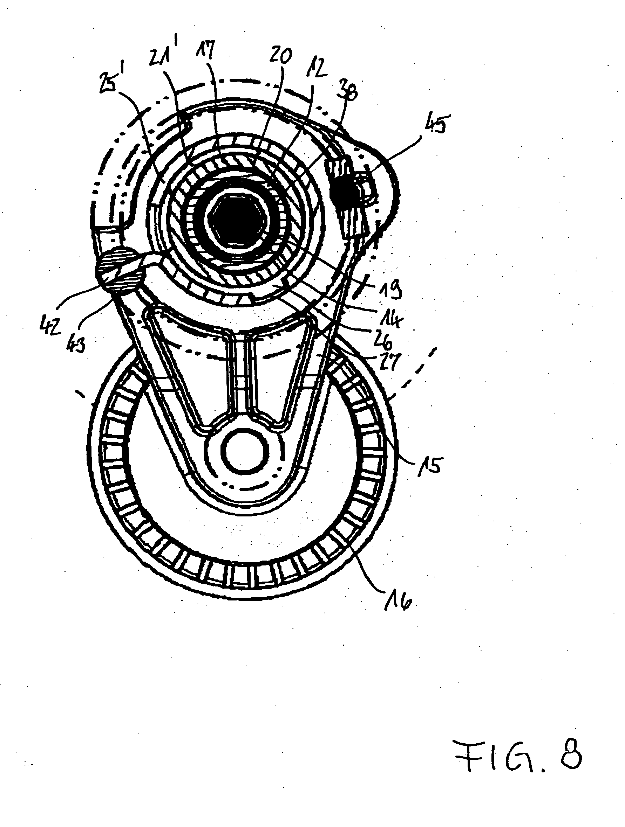

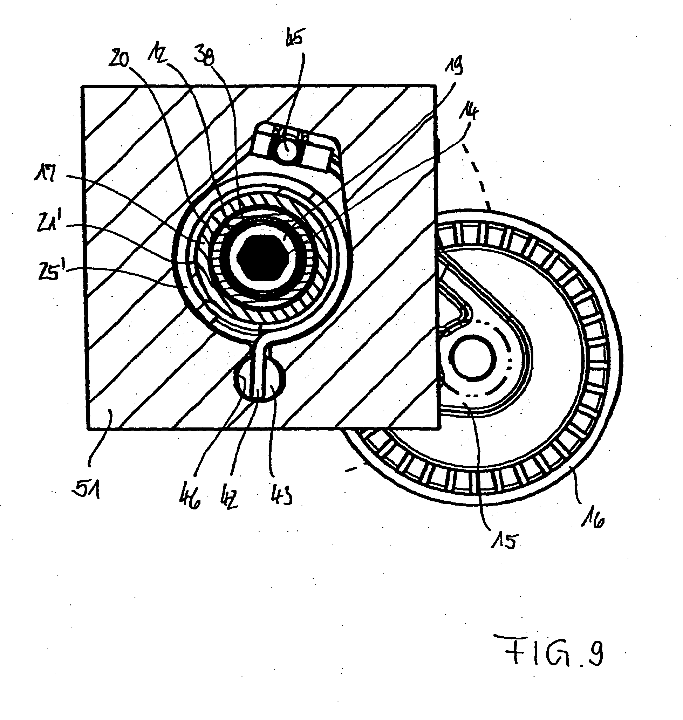

Die Figuren 7 bis 9 werden nachstehend gemeinsam beschrieben. Eine erfindungsgemäße Riemenspannvorrichtung 11 umfaßt im wesentlichen ein rohrförmiges Gehäuse 12 mit einer Längsachse A, an das ein Befestigungsflansch 13' außen angesetzt ist, und in dem eine Torsionsfeder 14 einliegt, einen um die Längsachse A schwingenden Spannarm 15 sowie eine am freien Ende des Spannarmes um eine parallel zur Längsachse A liegende Drehachse B drehbare Spannrolle 16. Der Spannarm 15 umfaßt ein Lagerauge 17', in das ein Stopfen 18 eingesetzt ist. Das Lagerauge 17' ist über eine Gleitlagerbuchse 20' unmittelbar auf dem Gehäuse 12 drehbar gelagert. Der Stopfen 18 hat einen Hülsenansatz 19, der in das Gehäuse 12 eingreift und über eine Dichtungshülse 38 gegenüber diesem abgedichtet ist. Die Torsionsfeder 14 ist über einen fest in das Gehäuse 12 eingesetzten Stopfen 30 an einem Ende des Gehäuses 12 drehfest mit diesem verbunden, während das andere Ende der Torsionsfeder drehfest mit dem Hülsenansatz 19 des Stopfens 18 und damit mit dem Spannarm 15 verbunden ist. Auf dem Lagerauge 17' sitzt eine am Umfang geschlitzte Dämpfungshülse 21. Die Reibungshülse 21 wird von einer ebenfalls am Umfang geschlitzten Federhülse 25' umgeben, die gegenüber der Reibungshülse 21' radial vorgespannt ist und somit die geschlitzte Reibungshülse mit radialer Vorspannung auf dem Lagerauge 17' festhält. Die Federhülse 25' ist gegenüber der Reibungshülse 21' in Umfangsrichtung formschlüssig festgelegt, insbesondere durch einen Radialnoppen 26, der in ein entsprechendes Loch 27 in der Bandfeder 25' eingreift. Der Befestigungsflansch 13' ist ein Stützflansch und weist ausschließlich Verdrehsicherungsmittel gegenüber einer Stützfläche eines Aggregats oder einer Befestigungsanordnung auf. Am freien Ende des Gehäuses sitzt eine Axialspannhülse 39 auf, die mittels einer Scheibe 40 und einer in die Hülse 21 eingedrehten Schraube 41 so gespannt werden kann, daß das Gehäuse 12 in einem Aggregat oder einer Befestigungsanordnung, in welche es eingeschoben ist, verspannt werden kann. Eine Lasche 42 an der Federhülse 25', die radial abgebogen ist, ist in einer Tasche 46 des Befestigungsgehäuses festzulegen, wobei ein gummielastisches Dämpfungselement 43 zwischen beiden eingesetzt ist. Am äußeren Ende des Spannarmes 15 ist weiterhin ein Zapfenansatz 32 erkennbar, auf dem die Spannrolle 16 mittels eines Rillenkugellagers 33 gelagert ist, wobei das Lager mittels einer Schraube 34 auf dem Zapfenansatz 32 festgesetzt ist. Zur Abdichtung des Rillenkugellagers 33 ist ein Deckel 35 in die Spannrolle 16 eingesetzt.

Wie in Figur 7 zu erkennen ist, ist das Gehäuserohr 12 durch eine Gehäusebohrung 52 des weggebrochen dargestellten Aggregats 51 durchgesteckt, wobei sich der Flansch 13' an einer Flanschfläche 53 und die Spannschraube 39 an einer entgegengesetzt gerichteten Flanschfläche 55 abstützen, so daß die Riemenspannvorrichtung im Aggregat 51 verspannt ist, wobei die Montage von der Stirnseite des Aggregats 51 aus erfolgt, über die sich der Riementrieb erstreckt und die durch die Lage der Flanschfläche 53 definiert ist.

Aus der vorstehend beschriebenen Konstruktion ergibt sich die folgende Funktion der Riemenspannvorrichtung. Gegenüber dem mit dem Flansch 13 und der Hülse 39 festlegbaren Gehäuse 12 ist der Spannarm 15 mit der Buchse 19 um die Längsachse A verschwenkbar. Bei einer Schwenkbewegung wird die Torsionsfeder 14, die zum einen in dem Stopfen 30 und damit im Gehäuse 12 festgelegt ist, zum anderen in dem Stopfen 18 und damit dem Spannarm 15 festgelegt ist, gegen elastische Rückstellkräfte verdreht. In der Einbaulage ist es hierbei möglich, daß die Torsionsfeder 14 in einer bereits stark vorgespannten verdrehten Stellung gehalten ist. Jede Schwenkbewegung des Spannarmes 15 gegenüber dem Gehäuse 12 erzeugt eine Reibung der feststehenden Reibungshülse 21, die durch die Bandfeder 25 radial vorgespannt ist, gegenüber dem Lagerauge 17', das mit dem Spannarm 15 mitbewegt wird, so daß die Schwingbewegung des Spannarmes gedämpft wird.

### Bezugszeichenliste

- 11: Riemenspannvorrichtung
- 12: Gehäuse (rohrförmig)
- 13: Befestigungsflansch
- 14: Torsionsfeder
- 15: Spannarm
- 16: Spannrolle
- 17: Lagerauge
- 18: Stopfen
- 19: Hülse
- 20: Gleitlagerbuchse
- 21: Reibungshülse
- 22: Rippe
- 23: Rippenanschlag
- 24: Rippenanschlag
- 25: Federhülse
- 26: Noppen
- 27: Loch
- 28: Stift
- 29: Langloch
- 30: Befestigungsloch
- 31: Befestigungsloch
- 32: Hülsenansatz
- 33: Kugellager
- 34: Schraube
- 35: Deckel
- 36: Zylinderfläche
- 37: Zylinderfläche
- 38: Dichtungshülse
- 39: Axialspannhülse
- 40: Scheibe
- 41: Schraube
- 42: Lasche
- 43: Dämpfungselement
- 44: Bohrung
- 45: Sicherungsstift
- 46: Tasche

- 51: Aggregat
- 52: Gehäuseöffnung
- 53: Flanschfläche
- 54: Ansenkung
- 55: Flanschfläche

## Patentansprüche

1. Riemenspannvorrichtung (11) mit einer Torsionsfederanordnung und einer Dämpfungsanordnung (21) mit einem Gehäuse (12) mit einer Längsachse (A), einer Torsionsfeder (14), die koaxial zur Längsachse (A) in dem Gehäuse (12) liegt und mit einem ihrer Enden drehfest in dem Gehäuse (12) festgelegt ist, einem Spannarm (15), der gegenüber dem Gehäuse (12) um die Längsachse (A) schwingend drehbar gelagert ist und mit dem anderen Ende der Torsionsfeder (14) drehfest verbunden ist, und einer Spannrolle (16), die an einem freien Ende des Spannarms (15) um eine zur Längsachse (A) parallele Drehachse (B) drehbar gelagert ist,
**dadurch gekennzeichnet,**
**daß** die Dämpfungsanordnung (21) das Gehäuse (12) koaxial zur Längsachse (A) umgibt und zylindrische Reibflächenpaarungen (36, 37) aufweist.

2. Vorrichtung nach Anspruch 1,
**dadurch gekennzeichnet,**
**daß** die Dämpfungsanordnung (21) eine am Umfang geschlitzte Reibungshülse (21) umfaßt, die mit einer inneren Zylinderfläche (37) auf einer äußeren Zylinderfläche (36) des Gehäuses (12) sitzt und die bei Relativbewegung des Spannarms (15) gegenüber dem Gehäuse (12) auf der Zylinderfläche (36) gleitet (Figur 1, Figur 4).

3. Vorrichtung nach Anspruch 2,
**dadurch gekennzeichnet,**
**daß** die Reibungshülse (21) formschlüssig im Drehsinn im Spannarm (15) gehalten ist und von einer geschlitzten Federhülse (25) mit radialer Vorspannung umschlossen wird, wobei die Formschlußmittel der Reibungshülse (21) durch den Schlitz der Federhülse (25) hindurchgreifen (Figur 1).

4. Vorrichtung nach einem der Ansprüche 2 oder 3,
**dadurch gekennzeichnet,**
**daß** die Reibungshülse (21) mittels eines äußeren Formvorsprungs, insbesondere einer Rippe (22), in einem Lagerauge (17) des Spannarms (15) formschlüssig gehalten ist (Figur 1).

5. Vorrichtung nach Anspruch 2
**dadurch gekennzeichnet,**
**daß** die Reibungshülse (21) von einer geschlitzten Federhülse (25) mit radialer Vorspannung umschlossen wird, wobei die Federhülse (25) formschlüssig im Drehsinn im Spannarm (15) gehalten wird (Figur 4).

6. Vorrichtung nach Anspruch 5,
**dadurch gekennzeichnet,**
**daß** die Federhülse (25) eine nach außen gebogene Lasche (42) umfaßt, die in einer Tasche (46) im Spannarm (15) festgelegt ist.

7. Vorrichtung nach Anspruch 6,
**dadurch gekennzeichnet,**
**daß** zwischen der Lasche (42) und der Tasche (46) elastische Dämpfungsmittel (43) eingesetzt sind.

8. Vorrichtung nach einem der Ansprüche 2 bis 7,
**dadurch gekennzeichnet,**
**daß** die Reibungshülse (21) und die Federhülse (25) in Umfangsrichtung formschlüssig miteinander verbunden sind, insbesondere über eine Zapfen-Bohrungs-Eingriffskombination (26, 27).

9. Vorrichtung nach einem der Ansprüche 2 bis 8,
**dadurch gekennzeichnet,**
**daß** die Dämpfungsanordnung (21) in radialer Überdeckung mit der Spannrolle (16) angeordnet ist.

10. Vorrichtung nach einem der Ansprüche 2 bis 9,
**dadurch gekennzeichnet,**
**daß** im Anschluß an das Lagerauge (17) des Spannarms (15) ein Befestigungsflansch (13) fest auf dem Gehäuse (12) angeordnet ist, insbesondere als bezüglich der Längsachse (A) radial ausgerichteter Ringflansch.

11. Vorrichtung nach Anspruch 10,
**dadurch gekennzeichnet,**
**daß** der Befestigungsflansch (13) als Anschraubflansch ausgebildet ist.

12. Vorrichtung nach Anspruch 1,
**dadurch gekennzeichnet,**
**daß** die Dämpfungsanordnung (21', 25') eine geschlitzte Reibungshülse (21') umfaßt, die mit einer inneren Zylinderfläche (37') auf einer äußeren Zylinderfläche (36') eines mit dem Spannarm (15) verbundenen Lagerauges (17') sitzt und die bei Relativbewegung des Spannarms (15) gegenüber dem Gehäuse (12) auf dieser Zylinderfläche (36') gleitet (Figur 7).

13. Vorrichtung nach Anspruch 12,
**dadurch gekennzeichnet,**
**daß** die Reibungshülse (21') von einer geschlitzten Federhülse (25') mit radialer Vorspannung umschlossen ist.

14. Vorrichtung nach einem der Ansprüche 12 oder 13,
**dadurch gekennzeichnet,**
**daß** die Reibungshülse (21') und die Federhülse (25') in Umfangsrichtung formschlüssig miteinander verbunden sind, insbesondere über eine Zapfen-Bohrungs-Eingriffskombination (26, 27).

15. Vorrichtung nach Anspruch 14,
**dadurch gekennzeichnet**,
die Federhülse (25') eine Lasche (42) zur drehfesten Festlegung in einem mit dem Gehäuse (12) verbindbaren Bauteil (B) aufweist.

16. Vorrichtung nach einem der Ansprüche 12 bis 15,
**dadurch gekennzeichnet,**
**daß** die Dämpfungsanordnung (21', 25') im Verhältnis zur Spannrolle (16) axial versetzt liegt.

17. Vorrichtung nach einem der Ansprüche 12 bis 16,
**dadurch gekennzeichnet,**
**daß** axial im Anschluß an das Lagerauge (17') des Spannarms (15) ein Befestigungsflansch (13') fest auf dem Gehäuse (12) angeordnet ist.

18. Vorrichtung nach Anspruch 17,
**dadurch gekennzeichnet,**
**daß** der Befestigungsflansch (13') als Anlage- und Stützflansch mit Verdrehsicherungsmitteln ausgebildet ist, der mit einer mit dem freien Ende des Gehäuses (12) verschraubbaren Stützhülse (38) zusammenwirkt.
